# EUROPEAN PATENT APPLICATION

(11) **EP 1 295 638 A1**
(43) Date of publication of application: **26.03.2003**
(21) Application number: 01203604.2
(22) Date of filing: 20.09.2001
(51) Int. Cl.: B01J 37/00, B01J 35/02

(54) **Method of preparing catalyst bodies**

(71) Applicant: Avantium International B.V., 1014 BV Amsterdam (NL)
(72) Inventor: Sijpkes, André Harmen, 1338 SZ Almere (NL); van den Brink, Peter John, 3972 EJ Driebergen (NL)
(74) Representative: Bakkum, Ruben Joseph

(57) **Abstract**

The present invention relates to a method of preparing catalyst bodies, in particular catalyst flakes, having a pre-selected thickness, in particular for high throughput experimentation, wherein the method comprises the steps of:
(a) preparing a mixture comprising catalyst components;
(b) distributing the mixture on a substantially flat surface;
(c) optionally drying the mixture;
(d) optionally calcining the mixture;
(e) compressing the enclosed mixture by applying pressure, such that a substantially flat thin plate having a pre-selected thickness smaller than 2 mm is obtained;
(f) breaking the plate into catalyst bodies; and
(g) optionally sieving the catalyst bodies.

The invention further relates to catalyst bodies obtainable by the method and to the use of the catalyst bodies in high throughput experimentation.

## Description

The present invention relates to a method of preparing catalyst bodies, in particular catalyst flakes. Such methods are known in the art.

Conventional techniques for preparing catalyst bodies in bulk amounts comprise the steps of extrusion of a catalyst mixture, followed by drying, crushing, and sieving, thereby obtaining catalyst bodies. Alternatively, pelletizing of a catalyst mixture, followed by crushing of the obtained pellets is known.

A problem that is encountered using the known methods is that when trying to manufacture small catalyst bodies the obtained catalyst bodies do not have uniform dimensions. Even if the catalyst bodies are sieved, the sieved fraction is not uniform with respect to the smallest dimension. Also, in particular if the pelletizing method is used, a significant amount of material (sometimes > 70%) becomes too small after crushing in order to be used as catalyst particles. Unfortunately, direct pelletising to obtain small pellets is difficult, as this usually results in blockage of the pelletizing equipment.

The above problem is particularly pertinent when the catalyst bodies are to be used in high throughput experimentation, wherein a plurality of relatively small vessels are used in parallel. High throughput experimentation is well known in the art and is used for simultaneously conducting a large number of experiments using a plurality of vessels, optionally with different reaction conditions. High throughput experimentation is used for instance in the pharmaceutical industry for the discovery and development of new and useful drugs and in the field of catalysts for the development and screening of new catalysts.

In high throughput experimentation, in particular when so called continuous flow test equipment is used, the catalyst bodies should have specific dimensions, such that on the one hand the bodies fit in the vessels (having e.g. an internal diameter of 2 mm), but on the other hand are not too small such that the packed catalyst bodies lead to too high a pressure drop. In addition, it has been found that, to create a similar degree of diffusion limitation of reactants and products for each particle, the shape of the catalyst bodies should be similar and the smallest dimension of the bodies should be uniform.

A further problem of the known methods is that they can only be applied at scales of 10 g and higher, as they are bulk techniques.

An even further problem of the known methods, in particular when using extrusion, is that they have limited applicability with regard to choice of materials to be used. Often special additives are required.

Therefore, it is an object of the present invention to provide a method of preparing catalyst bodies, in particular catalyst flakes suitable for high throughput experimentation, which can economically be obtained in small amounts.

It is a further object of the present invention to provide a method for preparing catalyst bodies in particular catalyst flakes having uniform pre-selected dimensions.

It is even a further object of the present invention to provide an alternative method of preparing catalyst bodies.

The above and other objects can be achieved in a surprisingly simple and elegant manner by the present invention which provides a method for preparing catalyst bodies, in particular catalyst flakes having a pre-selected thickness, in particular for high throughput experimentation, wherein the method comprises the steps of:
- preparing a mixture comprising catalyst components;
- distributing the mixture on a substantially flat surface;
- compressing the enclosed mixture by applying pressure, such that a substantially flat thin plate having a pre-selected thickness smaller than 2 mm is obtained; and
- breaking the plate into catalyst bodies.

Herewith catalyst bodies having a similar shape (i.e. thin flat flakes) and uniform thickness can be obtained in a surprisingly simple manner.

A further advantage is that the catalyst bodies can be easily and economically obtained in high yields relative to the starting material, even if only small amounts in the order of 1 gram are desired.

Further, no special processing additives are required (as is the case when using extrusion). However, they can be used if desired or to mimic large scale extrusion.

The method according to the present invention may advantageously be used to mimic various commercial catalyst shaping processes on a minitiaturized scale.

The method according to the present invention also allows for easy automation and parallelization.

Mention is made of British patent GB-643,109 which discloses a flaked catalyst composition and its preparation, wherein the flakes comprise a metallic element in catalytic state dispersed in a solidified oleaginous substance (such as a vegetable oil) as a protective (passivating) medium. The flakes obtained according to GB-643,109 have only a fairly uniform thickness, and are therefore not suitable for use in e.g. high throughput experimentation as they do not provide for a proper continuous flow. Further, the specific dimensions and shape of the flakes obtained according to GB-643,109 are not critical, as the object of GB-643,109 is to provide a catalytic material being homogeneous in composition, e.g. having a homogeneous reduced nickel content; therefore any shape will do. Using the method of GB-643,109 it is not possible to obtain the catalyst bodies, e.g. flakes obtainable according to the present invention. Further, the method of GB-643,109 is not suitable for preparing small quantities.

When using the method according to the present invention first a mixture of catalyst components (such as the catalyst support and/or the active phase and any other additives) is prepared. This mixture may be a dry powder, a slurry, a solution, etc. comprising the catalyst components. Also the mixture may be a mixture as normally used for the known extrusion techniques. In case the mixture is a slurry it preferably may have been processed by high shear mixing or wet grinding.

The person skilled in the art will understand that as a catalyst support, if present, any suitable support may be used, such as a support comprising silica, alumina, titania, zirconia, etc. or a mixture thereof. Also any suitable active phase and/or additives may be used. Further, already synthesized catalysts, e.g. commercially available pellets or powders may be used.

Usually, a mixture is prepared from catalyst powder particles of 0.01-10 µm. If the size is larger, an extra milling step may be performed.

Then the mixture comprising the catalyst components is distributed on a substantially flat surface, e.g. made from a metal, a ceramic material or any other suitable material, preferably high density alumina. Especially when a suitable slurry is used, this will result in a layer having a uniform thickness being formed on the flat surface.

Subsequently the mixture may be dried and/or calcined if appropriate or desired to remove any solvents. Preferably the mixture is calcined between 250-1200°C, more preferably between 400-600°C. Herewith, possible present organic solvents or other present organic materials (templates, additives, etc.) are removed; possible present metal salts are decomposed and oxidized to form their respective metal oxides; possible present crystal forms are transformed to more stable crystal phases (anatase is transformed by heat treatment to rutile, for example); the material is made stronger, or it becomes more resistant towards attrition. The person skilled in the art will readily understand that the drying and calcining steps may, alternatively or in addition, also be performed after the compressing step or even after the breaking step.

A mixture in the form of an amount of dried powder or a crust is thus obtained.

Thereafter, the mixture is compressed. To this end, the mixture is preferably enclosed and compressed using an open mould and a stamp. Materials for the mould and the stamp are well known to those skilled in the art. Engineering materials such as metals and polymers may be used in most cases. Preferably the mould and the stamp are made from an inert and high compression strength resistant engineering ceramic such as high density alumina or hard metals such as carbides or nitrides.

Herewith a substantially flat thin plate having a pre-selected thickness smaller than 2 mm may be obtained. The person skilled in the art will readily understand that any other compressing means may be used, as long as a substantially flat thin plate having a pre-selected thickness smaller than 2 mm may be obtained.

It has been found that advantageous results are obtained when the mixture is compressed applying a pressure between 100-1500 kg/cm².

Preferably, the mixture is compressed such that a pre-selected thickness between 0.1-0.3 mm is obtained. It has surprisingly been found that catalyst bodies having a uniform thickness between 0.1-0.3 mm provide for optimal diffusion of reactants and products when used in high throughput experimentation or in other continuous flow tests.

After compressing, the thin plate obtained is removed and broken into bodies, e.g. by cutting or crushing. If desired, the thin plate may, and preferably will, also be broken whilst it is still on the flat surface.

Preferably the plate is broken using a breaking element comprising a plurality of pointed projections, such as needles, knives or the like. The pointed projections may be spaced such that a suitable dimension of the bodies (e.g. flakes) can be obtained. It has been found that use of such a breaking element comprising usually parallel and sharp projections allows bodies with specific and well defined dimensions to be obtained. Further, using this breaking element only a small amount of 'fines' (particles smaller than 0,1 mm) are formed during crushing. With this breaking tool also a small fraction of oversized bodies is obtained. As a result the yield of bodies with desired dimensions is high.

Finally, the bodies are optionally sieved, preferably such that a particle size between 0.05-0.60 mm, preferably 0.10-0.50 mm, is obtained. It has been found that such particle sizes on the one hand enable the catalyst bodies to fit in reactor vessels which are frequently used in high throughput experimentation. On the other hand these particle sizes prevent pressure drop when continuous flow is used.

The person skilled in the art will understand that many modifications may be made to the method described above.

Further, the present invention relates to catalyst bodies, in particular catalyst flakes, obtainable by the method according to the present invention.

The catalyst bodies obtainable by the method according to the present invention have a well-defined, uniform thickness, while the other dimensions of the bodies may be chosen by selection of a proper breaking element and/or one or more appropriate sieves. Often and preferably the sieves will be chosen such that of the fraction aimed at the thickness is the smallest dimension.

An important aspect of the present invention is that catalyst bodies having a similar form (i.e. thin flat flakes) and uniform thickness can be obtained in a surprisingly simple manner. In this respect it is noted that sieving of catalyst bodies obtained by known methods, using e.g. extrusion, will not result in bodies having a similar form, i.e. they are not flat.

Finally the present invention relates to the use of the catalyst bodies according to the present invention, preferably having a uniform thickness between 0.1-0.3 mm, in high throughput experimentation.

Hereinafter the invention will be illustrated in more detail by an example.

### Example

An amount of 0.3 g of titania powder (crushed powder, P25, DEGUSSA, Germany) having a particle size of about 40 µm (D 50) was added to 0.9 g water to make a slurry. The slurry had a slurry concentration of 25 wt.% dry solids. The slurry was evenly distributed on a flat circular high density alumina plate of 4 cm diameter provided with a circumferential rim of 0.5 cm high.

The slurry, distributed on the flat plate and surrounded by the rim, was dried in an oven at 120 °C during 1 h. Thereafter, it was calcined at 550 °C during 1 h. Subsequently the dried and calcined slurry was closed in by positioning a stamp exactly fitting in between the rim, and a pressure of 600 kg/cm² was applied during 2 minutes. A perfectly flat thin plate having a thickness of 0,2 mm was obtained.

The thin catalyst plate was broken on the high density alumina plate using a breaking element obtaining catalyst flakes having the same thickness. The breaking element comprised a bundle of sharp needles (30 needles/cm²) mounted onto a block of stainless steel.

It has been found that advantageous results are obtained when the number of needles is 20 to 40 needles/cm². Preferably, the distance between the needles, which determines the size of the crushed particles, is 0,2 to 0,8 mm. The sharpness of the needles determines the amount of 'fines' (particles smaller than 0,1 mm) that are formed during crushing.

## Claims

1. Method of preparing catalyst bodies, in particular catalyst flakes, having a pre-selected thickness, in particular for high throughput experimentation, wherein the method comprises the steps of:
- preparing a mixture comprising catalyst components;
- distributing the mixture on a substantially flat surface;
- compressing the enclosed mixture by applying pressure, such that a substantially flat thin plate having a pre-selected thickness smaller than 2 mm is obtained; and
- breaking the plate into catalyst bodies.

2. Method according to claim 1, wherein the mixture is a slurry.

3. Method according to claim 1 or 2, wherein the mixture is dried.

4. Method according one or more of the preceding claims, wherein the mixture is calcined between 250-1200°C, preferably between 400-600°C.

5. Method according to one or more of the preceding claims, wherein the mixture is compressed using an open mould and a stamp.

6. Method according to one or more of the preceding claims, wherein the mixture is compressed applying a pressure between 100-1500 kg/cm².

7. Method according to one or more of the preceding claims, wherein the mixture is compressed such that a pre-selected thickness between 0.1-0.3 mm is obtained.

8. Method according to one or more of the preceding claims, wherein the plate is broken using a breaking element comprising a plurality of pointed projections.

9. Method according to one or more of the preceding claims, wherein the catalyst bodies are sieved, preferably obtaining a particle size between 0.05-0.60 mm, preferably 0.10-0.50 mm.

10. Catalyst bodies, in particular catalyst flakes, obtainable by the method according to one or more of the preceding claims 1-9.

11. Use of the catalyst bodies according to claim 10 in high throughput experimentation.

12. Use according to claim 11, wherein the catalyst bodies have a uniform thickness of between 0.1-0.3 mm.
